(19)

**Europäisches Patentamt**
**European Patent Office**
**Office européen des brevets**

(11) **EP 4 579 280 A1**

(12) **EUROPEAN PATENT APPLICATION**

(43) Date of publication:
**02.07.2025 Bulletin 2025/27**

(21) Application number: **24220601.9**

(22) Date of filing: **17.12.2024**

(51) International Patent Classification (IPC):
**G01S 13/42** *(2006.01)* **G01S 13/58** *(2006.01)*
**G01S 13/931** *(2020.01)* **G01S 7/35** *(2006.01)*

(52) Cooperative Patent Classification (CPC):
**G01S 13/931; G01S 7/354; G01S 13/42;**
**G01S 13/584**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **27.12.2023 RO 202300879**

(71) Applicant: **NXP B.V.**
**5656 AG Eindhoven (NL)**

(72) Inventors:
• **Rosu, Filip Alexandru**
**5656AG Eindhoven (NL)**
• **Voicu, Ionela-Cristina**
**5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **RADAR SIGNAL DIRECTION OF ARRIVAL SUPER-RESOLUTION ESTIMATION**

(57) A device includes a radar processor that transmits, at a first time, a first radar signal, receives a received signal, and processes the received signal to generate a range-Doppler data frame. The radar processor determines a first snapshot comprising a first plurality of values associated with a first range-Doppler bin of the range-Doppler data frame and processes the first plurality of values in the first snapshot to generate an autoregressive model based upon the first plurality of values. The radar processor uses use the autoregressive model to extrapolate a second snapshot, wherein the second snapshot includes the first plurality of values and a second plurality values generated using the autoregressive model, determines, using the second snapshot, a full rank covariance matrix, and identifies attributes of a plurality of objects using the full rank covariance matrix.

FIG. 3

**Description**

TECHNICAL FIELD

The present disclosure is directed in general to radar systems and associated methods of operation. In one aspect, the present disclosure relates to a radar system configured to determine a direction of arrival of an object using a super-resolution estimation approach.

BACKGROUND

A radar system transmits an electromagnetic signal and receives back reflections of the transmitted signal. The time delay and/or time delay variation between the transmitted and received signals can be determined and used to calculate the distance and/or the speed of objects causing the reflections, respectively. For example, in automotive applications, automotive radar systems can be used to determine the distance and/or the speed of oncoming vehicles and other obstacles.

Automotive radar systems enable the implementation of advanced driver-assistance system (ADAS) functions that are likely to enable increasingly safe driving and, eventually, fully autonomous driving platforms. Such systems use radar systems as the primary sensor for ADAS operations.

The accuracy of automotive radar systems can be affected by inaccuracies in the positions of the various transmit and receive antennas of a radar system. Accordingly, techniques are needed to improve the effective accuracy of signals from real-world radar system to increase the likelihood of object detections and the determination of attributes (e.g., direction of arrival) of those objects.

BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 depicts a simplified schematic block diagram of an automotive radar system.

FIG. 2 depicts an input signal that may be associated with a particular range-Doppler snapshot of a received reflection signal captured by a vehicle radar system using a 4 element receive array.

FIG. 3 depicts the original input signal of FIG. 2 increased in size by the addition of autoregressive predicted values at the beginning of the input signal and at the end of the input signal.

FIG. 4 depicts an algorithm that may be used to perform forward-backward spatial smoothing (FBSS) on an input signal.

FIG. 5 is a chart depicting the probability (vertical axis) of separation or identification of two and three objects when using a conventional direction-of-arrival (DoA) estimation.

FIG. 6 depicts the performance of the MUSIC algorithm in a conventional signal processing chain when the phased array is perfectly calibrated.

FIG. 7 depicts the performance of the MUSIC algorithm utilizing the present super resolution signal processing approach when the phased array is perfectly calibrated.

FIG. 8 depicts the probability of object separation for two objects using a conventional CAPON algorithm when the phased array is perfectly calibrated.

FIG. 9 depicts the performance of the CAPON algorithm utilizing the present super resolution signal processing approach when the phased array is perfectly calibrated.

FIG. 10 depicts the performance of the MUSIC algorithm in a conventional signal processing chain when the phased array has residual calibration errors.

FIG. 11 depicts the performance of the MUSIC algorithm utilizing the present super resolution signal processing approach when the phased array has residual calibration errors.

FIG. 12 depicts the probability of object separation for two objects using the conventional CAPON algorithm when the phased array has residual calibration errors.

FIG. 13 depicts the performance of the CAPON algorithm utilizing the present super resolution signal processing approach when the phased array has residual calibration errors.

DETAILED DESCRIPTION

The following detailed description is merely illustrative in nature and is not intended to limit the embodiments of the subject matter of the application and uses of such embodiments. As used herein, the words "exemplary" and "example" mean "serving as an example, instance, or illustration." Any implementation or embodiment described herein as exemplary, or an example is not necessarily to be construed as preferred or advantageous over other implementations. Furthermore, there is no intention to be bound by any expressed or implied theory presented in the preceding technical field, background, or the following detailed description.

Automotive radar systems are used to support advanced driver-assistance system (ADAS) functions like assisted cruise control, emergency braking, and blind spot monitoring and alerts. The spatial resolution of a phased array radar system is dependent on the size of the aperture, which can be either physical, virtual (e.g., in radar systems having a multiple-input, multiple-output (MIMO) configuration), synthetic (e.g., as in synthetic aperture radar (SAR)). While the latter dwarfs the first two in performance under specific circumstances, such a radar system configured is not generally suitable for automotive applications due to specific geometry constraints of a SAR system. Consequently, automotive radars tend to rely strictly on the physical spacing of the radar system's receiver (RX) antennas and transmitter (TX) antennas (e.g., as arranged in a MIMO array). This spacing is typically quite small (e.g., on the order of millimeters) for practical considerations. Consequently, it is quite difficult to position a radar system's antenna elements with adequate accuracy, which results in a reduced resolution of real work radar systems (i.e., compared to ideal radar systems with perfect RX and TX antenna placement).

In an attempt to compensate for the reduced natural resolution of real-world radar systems, super-resolution algorithms have been proposed to improve the apparent resolution of such systems. However, in conventional super-resolution approaches, such algorithms generally require certain conditions to function properly, such as a relatively high signal-to-noise ratio (SNR), well known antenna spacing, narrow-band plane-wave approximation, and no antenna coupling or channel trace-mismatch errors.

In conventional radar system designs, super-resolution is applied only on range-Doppler detections, such that the processing is not too exhaustive and the signal-to-noise ratio (SNR) is high. However, because perfect antenna spacing and a total lack of antenna coupling or trace-mismatch errors is impossible to ensure in a real-world radar system, especially when considering the large temperature changes seen in automotive applications, these super-resolution approaches may not be particularly successful.

Consequently, the present disclosure provides a radar system signal processing approach that can improve robustness of super-resolution algorithms to such inevitable system-level errors, such as those embodied in antenna placement errors. This is achieved by using an autoregressive model to extrapolate values of the signal being processed before applying enhanced object estimation techniques. The autoregressive model can extrapolate harmonic signals, such that the parasitic modulations of the spatial signal are ignored. The autoregressive model alone may not provide sufficient resolution to be used on its own but can enhance the received signal enough for the super-resolution algorithms to extract desired information correctly.

Covariance matrix based super-resolution methods typically require multiple snapshots of radar signal data to build a full-rank covariance matrix enabling adequate object detection. When only single-snapshot measurements are available, techniques such as spatial smoothing or Hankel matrix formation are generally required to build a smaller but full-rank covariance matrix. In conventional radar systems, however, the reduced size of such a covariance matrix has a significant detrimental effect on both the resolution and the total number of objects that can be detected by such signal processing. To remedy these deficiencies, the present disclosure provides approaches for constructing a full-rank covariance matrix enabling a super-resolution algorithm to detect more a comprehensive set of objects in a single snapshot measurement environment.

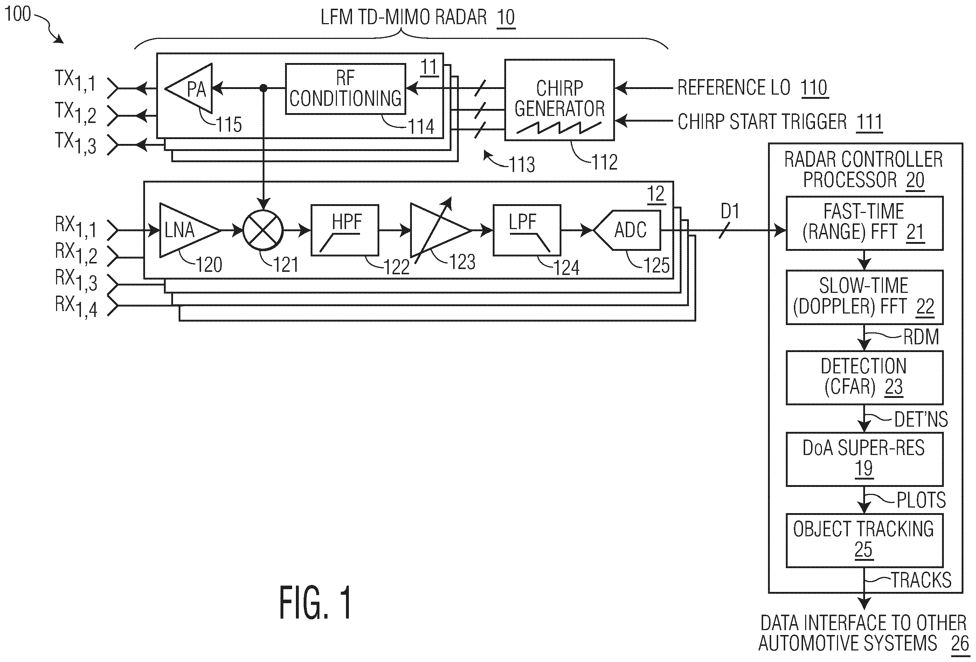

Reference is now made to FIG. 1 which depicts a simplified schematic block diagram of automotive radar system 100. The example automotive radar system 100 includes MIMO radar device 10 connected to a radar controller processor 20. In selected embodiments, MIMO radar device 10 may be embodied as a line-replaceable unit (LRU) or modular component that is designed to be replaced quickly at an operating location. Similarly, the radar controller processor 20 may be embodied as a line-replaceable unit (LRU) or modular component. Although a single or mono-static MIMO radar device 10 is shown, it will be appreciated that additional distributed radar devices may be used to form a distributed or multi-static radar. In addition, the depicted radar system 100 may be implemented in integrated circuit form with the LFM TD-MIMO radar device 10 and the radar controller processor 20 formed with separate integrated circuits or chips or with a single chip, depending on the application.

Each radar device 10 includes one or more transmitting antenna elements TXi and receiving antenna elements RXj connected, respectively, to one or more radio frequency (RF) transmitter (TX) units 11 and receiver (RX) units 12. For example, each radar device (e.g., 10) is shown as including individual antenna elements (e.g., TX1,i, RX1,j) connected, respectively, to three transmitter modules (e.g., 11) and four receiver modules (e.g., 12), but these numbers are not limiting and other numbers are also possible, such as four transmitter modules 11 and six receiver modules 12, or a single transmitter module 11 and/or a single receiver modules 12.

Each radar device 10 also includes a chirp generator 112 that is configured and connected to supply a chirp input signal to the transmitter modules 11. To this end, the chirp generator 112 is connected to receive a separate and independent local oscillator (LO) signal 110 and a chirp start trigger signal 111, though delays are likely to be different due to the signal path differences and programmable digital delay elements in the signal paths. Chirp signals 113 are generated and transmitted to multiple transmitters 11, usually following a pre-defined transmission schedule, where they are filtered at the RF conditioning module 114 and amplified at the power amplifier 115 before being fed to the corresponding transmit antenna TX1,i and radiated. By sequentially using each transmit antenna TX1,i to transmit successive pulses in the chirp signal 113, each transmitter element 11 operates in a time-multiplexed fashion in relation to other transmitter elements because they are programmed to transmit identical waveforms on a temporally separated schedule.

The radar signal transmitted by the transmitter antenna unit TX1,i, TX2,i may be reflected by an object, and part of the reflected radar signal reaches the receiver antenna units RX1,i at the radar device 10. At each receiver module 12, the received (radio frequency) antenna signal is amplified by a low noise amplifier (LNA) 120 and then fed to a mixer 121 where it is mixed with the transmitted chirp signal generated by the RF conditioning module 114. Specifically, mixer 121 is configured to down-convert the RF signal to a baseband signal, meaning that during an acquisition window the object signals result into a superposition of constant-amplitude sinusoidal signals while the interference signal results in a broadband chirp-like signal (i.e., that is time-limited, after anti-aliasing filtering). The resulting intermediate frequency signal is fed to a first high-pass filter (HPF) 122. The resulting filtered signal is fed to a first variable gain amplifier 123 which amplifies the signal before feeding it to a first low pass filter (LPF) 124. This re-filtered signal is fed to an analog/digital converter (ADC) 125 and is output by each receiver module 12 as a digital signal D1. In various embodiments, the receiver module compresses object echoes of various delay signals into multiple sinusoidal tones whose frequencies correspond to the round-trip delay of the echo.

The radar system 100 also includes a radar controller processing unit 20 that is connected to supply input control signals to the radar device 10 and to receive therefrom digital output signals generated by the receiver modules 12.

In selected embodiments, the radar controller processing unit 20 may be embodied as a micro-controller unit (MCU) or other processing unit that is configured and arranged for signal processing tasks such as, but not limited to, object identification, computation of object distance, object velocity, and object direction, and generating control signals. The radar controller processing unit 20 may, for example, be configured to generate calibration signals, receive data signals, receive sensor signals, generate frequency spectrum shaping signals (such as ramp generation in the case of frequency-modulated continuous wave (FMCW) radar) and/or register programming or state machine signals for RF (radio frequency) circuit enablement sequences.

In addition, the radar controller processor 20 may be configured to program the modules 11 to operate in a time-division fashion by sequentially transmitting LFM chirps for coordinated communication between the transmit antennas TX1,i, RX1,j. The result of the digital processing at the radar controller processing unit 20 is that the digital domain signals D1 are processed by fast-time range frequency Fourier transform (FFT) 21, slow-time FFT 22 for Doppler compression, and constant false alarm rate (CFAR) object detection 23. For the objects identified by CFAR object detection 23, a direction of arrival (DOA) analysis is performed using a DOA super-resolution processing algorithm 24, in accordance with the present disclosure, to determine DOAs for the objects identified by CFAR object detection 23. With DOAs determined, object tracking 25 process the object range, doppler, and DOA information to predict paths of the objects, with the result being output 26 to other automotive computing or user interfacing devices for further process or display. When performing object detection, the radar controller processor 20 is configured to determine a range profile of the reflected radar signals, where peaks in the range profile are indicative of potential objects at known ranges.

During operation of automotive radar system 100, radar controller processor 20 transmits control signals to the various components of one or more radio frequency (RF) transmitter (TX) units 11 and receiver (RX) units 12 to control how the radar signals transmitted by automotive radar system 100 are the transmitted signals are shaped and how the received signals are processed.

The natural spatial resolution for phased array radar, such as the radar system 100 depicted in FIG. 1, can be dependent on the size of the radar system's aperture, which can be either physical, virtual (MIMO), synthetic (SAR). Typically, in automotive applications, radar systems rely on the physical spacing of the system's RX and TX antennas (e.g., RX1,1 - RX 1,4 and TX1,1 - TX 1,3 antennas of FIG. 1) to form a MIMO array. This spacing can be quite small for practical considerations (e.g., on the order of millimeters), which can make it difficult to position the various radar system antennas with adequate precision. Because there can be some inaccuracies in antenna placement, typical radar systems rely on super-resolution algorithms to increase the overall resolution of the radar system.

However, in conventional radar systems, super-resolution algorithms can require certain conditions to function properly, such as high SNR, well known antenna spacing, narrow-band plane-wave approximation, and no antenna coupling / channel trace-mismatch errors. In most radar system designs super-resolution is applied only on range-Doppler detections, such that the processing is not too exhaustive and the SNR is high, however a perfectly known antenna spacing and no antenna coupling / trace-mismatch errors can be impossible to ensure, especially when considering the large temperature changes seen in automotive applications.

To compensate for these difficulties, the present disclosure provides a processing approach that improves robustness of super-resolution algorithms against these inevitable system-level deficiencies. Specifically, a signal processing pipeline (e.g., the pipeline implemented by radar controller processor 20 of radar system 100 of FIG. 1) uses an autoregressive model to extrapolate and, effectively, increase the size of the input signal of a current snapshot, thereby increasing the size of the signal sample and the corresponding covariance matrix. The larger (as compared to conventional approaches) covariance matrix is then used to perform enhanced estimation. As described herein, the autoregressive model may only extrapolate harmonic signals so that parasitic modulations of the spatial signal are ignored by the model. Although the autoregressive model alone cannot provide sufficient resolution to be used on its own, this approach increases the size of the received signal snapshot sufficiently for applied super-resolution algorithms to extract desired information correctly.

Furthermore, covariance matrix based super-resolution methods typically require multiple snapshots to build a full-rank covariance matrix. Consequently, when only single-snapshot measurements are available, techniques such as spatial smoothing or Hankel matrix formation are conventionally required to build a smaller but full-rank covariance matrix. The reduced size of the covariance matrix can have significant deleterious effects on both the resolution and the total number of objects that can be detected by such conventional signal processing approaches, which can, in some circumstances, reduce the total number of objects than can be detected by two or more. The signal processing approach of the present disclosure, in contrast, enables the super-resolution signal processing algorithm to detect a larger number of objects that would otherwise be limited by the original array size.

In a specific embodiment of the present disclosure, pole-based prediction can be used to extrapolate principle spectral components of an input radar system snapshot signal, thereby reducing the effect of parasitic modulations such as unresolved mutual coupling errors or phase/trace mismatch between phased array channels. Covariance Spatial Smoothing can then be used so that the size of the determined covariance matrix is equal to the number of original covariance matrix or + 1. This can enable the construction of a larger signal null space (noise sub-space), and the identification of more objects than would be possible using a conventional spatially smoothed covariance matrix approach.

As such, the present disclosure provides a refined DoA estimation process that is robust against calibration errors and also enables the detection of more objects than might normally be possible using conventional signal processing approaches.

When using super-resolution covariance matrix-based spectral estimation techniques a full rank covariance matrix is required. In radar systems that use single snapshot estimation, the non-singular covariance matrix can be obtained via spatial smoothing or Hankel formation. Such an approach can result in a 1.5 up to 2x reduction in aperture size (reflected in a reduction in size of the covariance matrix), along with additional signal degradation.

Consequently, the effect of covariance spatial smoothing is a reduced spatial resolution of the radar system and a reduced number of maximum detectable objects (e.g., cut by about half).

To mitigate these deleterious effects of conventional super-resolution covariance matrix-based spectral estimation, in the present disclosure a prediction filter (e.g., an autoregressive model) is used to effectively increase the size of the input signal such that larger snapshots are artificially generated, enabling improved system performance.

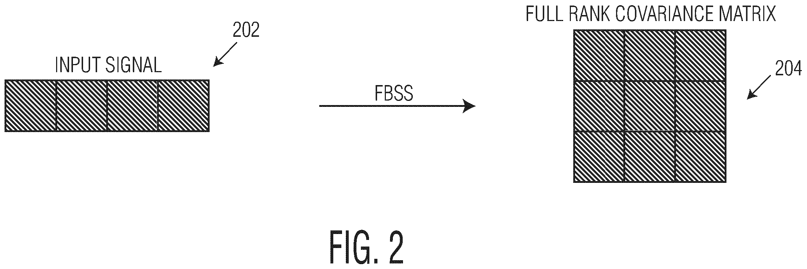

To illustrate, FIG. 2 depicts, in block form, an input signal 202 that may be associated with a particular range-Doppler snapshot of a received reflection signal captured by a vehicle radar system. In this example, the individual blocks of input signal 202 may represent samples of the analog input signal where the samples are associated with a particular range-Doppler bin. The input signal 202, once captured, is processed (e.g., via ) to determine a corresponding covariance matrix 204. As described herein, the covariance matrix 204 is then used to perform object detection and estimation of object range, speed, and direction of arrival.

As discussed herein, where the size of input signal 202 is limited (e.g., due to the limited size of input signal 202), the overall accuracy and resolution of the radar system output and even the total number of objects that can be detected by the system can be significantly reduced.

To remedy these deficiencies, the present disclosure provides an approach in which an autoregressive estimation is used to increase the signal of the input signal being processed. The increase in size of the input signal results in the generation of a larger, full-rank covariance matrix, thereby increasing the resolution and accuracy of the radar system's object estimation.

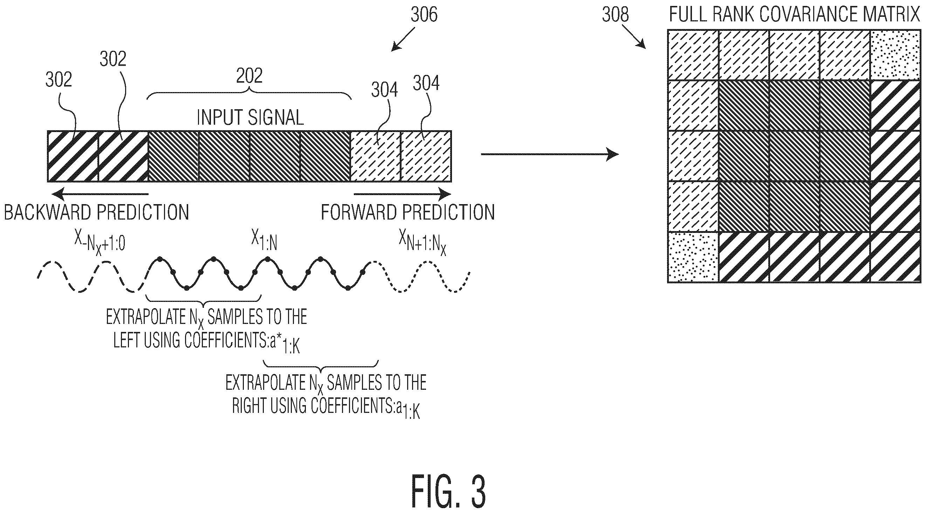

To illustrate, FIG. 3 depicts the original input signal 202, increased in size by the addition of autoregressive predicted values 302 at the beginning of the input signal 202 and predicted values 304 at the end of the input signal 202.

As described herein, where the value of the input signal 202 samples are designed $x_{1:N}$, where N is the total number of samples in the original input signal 202, the values of the predicted values 302 added at the beginning of the input signal 202 may be designated $x_{-Nx+1:0}$, where Nx is the total number of samples in the supplemented input signal 306 that combines input signal 202 and predicted values 302 and 304. Similarly, the predicted values 304 at the end of the input signal 202 may be designated $X_{N+1:Nx}$.

As illustrated by FIG. 3, the supplemented input signal 306, when processed, generates a larger full-rank covariance matrix. The dimensions of the larger full-rank covariance matrix 308 can be dependent upon various factors including the covariance smoothing technique utilized, whether that smoothing technique is forward, forward backward, or Hankel, the number of estimated objects, and on the input signal size. That larger full-rank covariance matrix 308 can enable greater accuracy and resolution when the radar performs object detection.

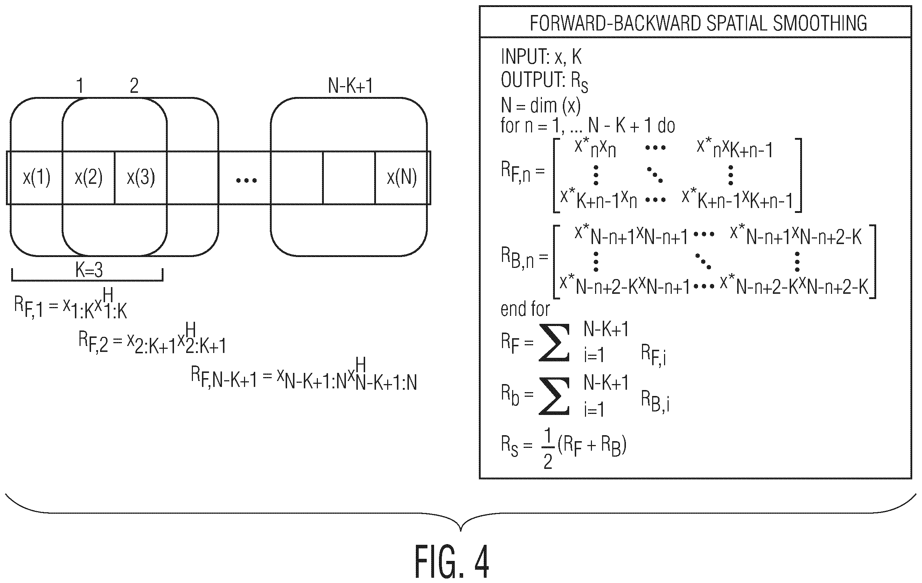

FIG. 4 depicts an algorithm that may be used to perform forward-backward spatial smoothing (FBSS) to the input signal. FBSS is typically used during signal processing as a preprocessor enabling successful generation of a full-rank covariance matrix based upon an input signal. Specifically, FBSS is used to ensure that the input signal is appropriately decorrelated. As shown, the FBSS algorithm receives as input the original captured signal (e.g., input signal 202 of FIG. 2) x and K which represents the size of the sliding window that will be used to generate the estimated values. A variable N is then defined as the dimension (e.g., size) of the input signal x.

With those input variables determined, an algorithm is executed in which the value n is incremented from an initial value of 1 to the value N (the size of the input signal) minus K (the size of the sliding window plus 1.

As n is incremented, the values $R_{F,n}$ and $R_{B,n}$ are determined.

$$\textbf{Input: } \boldsymbol{x}, K$$
$$\textbf{Output: } \widehat{\boldsymbol{R}}_S$$
$$N = \dim(\boldsymbol{x})$$
$$\textbf{for } n = 1, \ldots N - K + 1 \textbf{ do}$$

$$\boldsymbol{R}_{F,n} = \begin{bmatrix} x_n^* x_n & \cdots & x_n^* x_{K+n-1} \\ \vdots & \ddots & \vdots \\ x_{K+n-1}^* x_n & \cdots & x_{K+n-1}^* x_{K+n-1} \end{bmatrix}$$

$$\boldsymbol{R}_{B,n} = \begin{bmatrix} x_{N-n+1}^* x_{N-n+1} & \cdots & x_{N-n+1}^* x_{N-n+1-K} \\ \vdots & \ddots & \vdots \\ x_{N-n+1-K}^* x_{N-n+1} & \cdots & x_{N-n+1-K}^* x_{N-n+1-K} \end{bmatrix}$$

$$\textbf{end for}$$

$$\widehat{\boldsymbol{R}}_F = \sum_{i=1}^{N-K+1} \boldsymbol{R}_{F,i}$$

$$\widehat{\boldsymbol{R}}_B = \sum_{i=1}^{N-K+1} \boldsymbol{R}_{B,i} \quad \widehat{\boldsymbol{R}}_S = \frac{1}{2}(\widehat{\boldsymbol{R}}_F + \widehat{\boldsymbol{R}}_B)$$

The values $R_F$, $R_B$, and Rs can then be calculated according to the following expressions:

$$\widehat{\boldsymbol{R}}_F = \sum_{i=1}^{N-K+1} \boldsymbol{R}_{F,i}$$

$$\widehat{\boldsymbol{R}}_B = \sum_{i=1}^{N-K+1} \boldsymbol{R}_{B,i} \quad \widehat{\boldsymbol{R}}_S = \frac{1}{2}(\widehat{\boldsymbol{R}}_F + \widehat{\boldsymbol{R}}_B)$$

$\hat{R}_F$ represents the forward smoothed covariance matrix, constructed using x(n), $\hat{R}_B$ is the backward smoothed covariance matrix where the same operations are applied in reverse, and $\hat{R}_S$ represents the average of $\hat{R}_F$ and $\hat{R}_B$. The maximum rank of $\hat{R}_F$ and $\boldsymbol{R}_B$ is N/2, while for $\hat{R}_S$ is N/1.5.

Given a particular input signal snapshot, the present disclosure provides an approach to increase the size of that input signal to generate a larger covariance matrix. In turn, this increases the total number of detectable objects for a particular radar system. Because some degree of signal estimation involved, for a perfect signal (e.g., one captured by a radar system in which the system's antennas are positioned with perfect accuracy) there may be a slightly lower performance caused by the predictions errors, which slightly degrade spectral estimation. However, if the phased array is not properly calibrated, which is the case in nearly all real-world radar systems, the input signal is affected by multiplicative noise and the prediction error involved in the present approach becomes negligible enabling the present approach to significantly enhance overall system performance. Specifically, the present harmonic-based prediction, such as auto-regressive (AR) prediction, only reconstructs a single tone per pole, and cannot extrapolate wide band signals, such as the envelope/modulation produced by the calibration errors.

For example, in a specific embodiment of the present disclosure, the size of the input signal is increased through extrapolation/prediction involving the construction of an auto-regressive model that fits the input signal data **x,** which includes a plurality of sampled values for a particular snapshot of a specific range-Doppler bin of a processed radar signal.

The model is generally configured to approximate the equality below:

$$a = -R_{xx}^{-1} r_x,$$

where $a$ is a matrix containing the prediction coefficients of the autoregressive model, $r_x$ is the cross-correlation vector, and $R_{xx}^{-1}$ is the inverse of the cross-correlation matrix (which is Hermitian and Toeplitz), not to be confused with the covariance matrix, denoted with $R$. In various embodiments, the prediction coefficients of the autoregressive model can be generated using established signal processing techniques, such as Burg's method, Yule Walker equations, or Levinson's method. Generally, these approaches take the input signal x as an input and generate as outputs the coefficients of the autoregressive model. In an example, the model can then be represented using the Z transform as shown below:

$$H(z) = \frac{b[0]}{A_p(z)} = \frac{b[0]}{1 + \sum_{k=1}^{p} a_p(k) z^{-k}} = \frac{b[0]}{\prod_{k=1}^{K}(1 - e^{j\omega_k} z^{-1})}$$

Predictions (e.g., the predicted values 302 and predicted values 304 in supplemented input signal 306 of FIG. 3) can then be generated using the following equation in which the value n represents the index of the value being predicted. The function y() relies on the coefficient values a of the autoregressive model generated by the approaches described above.

$$y(n) = \sum_{k=1}^{p} a_k y(n - k), \tag{1}$$

where the value p is a fine-tuned value that is representative of the number of objects for which attributes (e.g., direction of arrival) are being determined. The value n represents the index of the current value being generated.

Using the present approach, therefore, a given input signal $\mathbf{x}$ comprises a snapshot of a processed range-Doppler frame of a received radar signal. The input signal has a number k of values. The input signal x is processed (e.g., via Burg's method, Yule Walker equations, or Levinson's method) to generate a matrix $a$ containing prediction coefficients of an autoregressive model that can be used to predict additional values of the input signal x based on existing values contained within input signal $\mathbf{x}$. Given the autoregressive model prediction coefficients, the autoregressive model can be used to predict additional values to add to the input signal $\mathbf{x}$ to increase its size. A value p is selected, where the value p is a fine-tuned value that is representative of the number of objects for which attributes (e.g., direction of arrival) are being determined.

In an embodiment, the additional values are generated using the function y(n) (i.e., equation (1), above), where n is the index of the value being presented. Accordingly, to generate, for example, three additional values to append to the end of the input signal $\mathbf{x}$, equation (1) is executed using the values n = k+1, n=k+2, and n=k+3, where n is a value that represents discrete time intervals. Positive values of n represent time values to the right, while negative values of n represent time intervals to the left. Similarly, to generate three additional values to insert at the beginning of input signal $\mathbf{x}$, equation (1) is executed using the values n = -1, n=-2, and n=-3.

By calculating predicted values using the autoregressive approach described above, a larger (effectively) input signal can be generated, and, in turn, a larger full rank covariance matrix can be calculated for a given input signal. With the larger full rank covariance matrix, various estimation approaches (e.g., MUSIC or CAPON) can be used to perform spectral estimation enabling the detection of objects in a reflected radar signals and the determination of range, speed, and direction of arrival information for the detected objects.

In still other embodiments of the present disclosure, other approaches may be utilized for estimating or predicting the generated values used to increase the dimensionality of the input signal, such as neural network-based prediction networks.

Once the input signal has been processed via the autoregressive model (or other approach) to increase the size of the input signal and generate a corresponding covariance matrix, various spectral estimation approaches can be used to analyze the covariance matrix to determine object attributes.

One such spectral estimation approach, MUSIC, calls for decomposing the full rank covariance matrix R into its eigenvalue components: $R = R_S + R_W = V \Lambda V^H$. The space generated by the eigenvalue vectors $V$ can be separated into two subspaces, $V$ = [$S$ $G$]. In that case, $S$ is a matrix with the eigenvalue vectors corresponding to the largest eigenvalue values as the matrix's columns and represents the signal subspace, and $G$ is formed from the eigenvalue vectors corresponding to the smallest eigenvalues and represents the noise subspace.

By multiplying the eigenvalue decomposition equation on the right hand side by $V^H$, the equation becomes:

$$R[S\ G] = [S\ G]\begin{bmatrix} \Lambda_S & 0 \\ 0 & \Lambda_G \end{bmatrix}$$

It is then possible to rewrite the matrix equation in system form as:

$$\begin{cases} R\ S = S\ \Lambda_S \\ R\ G = G\Lambda_G \end{cases}$$

Given that $R = APA^H + \sigma_w^2 I$, it is possible to rewrite the last system equation as: $\sigma_w^2 G = APA^H G + \sigma_w^2 G \rightarrow APA^H G = 0$.

Since **AP** cannot be 0, then $A^H G = 0$, meaning that the noise subspace is orthogonal to the subspace generated by the steering vector at the desired angles of arrival, $e^H(\omega_i)G = 0$.

The MUSIC algorithm is based on the orthogonality between the signal subspace and the noise subspace. Knowing that: $e^H(\omega)G = 0$ for $\omega = \omega_i$, where $\omega_i$ is the desired signal's angular frequency. For a real valued representation of the pseudo-spectrum, the Euclidian norm can be defined as follows:

$$\|e^H(\omega)G\|^2 = e^H(\omega)GG^H e(\omega) = \sim 0 \text{ for } \omega = \omega_i.$$

In a conventional signal processing system, estimation errors of the covariance matrix arise due to the relatively small number of signal samples (given by the number of antennas), the norm will not be exactly 0 at the angles of interest. This problem is mitigated by using auto-regressive approaches for increasing the size of the processed input signal and, consequently, the dimensions of the covariance matrix. Furthermore, in this algorithm $e^H(\omega)G$ can be computed as iFFT(**G**) with a FFT accelerator. The MUSIC pseudospectrum which can have pronounced maximums at the angles of interest (i.e., the DoA angles for identified objects) is then defined as:

$$P_{MUSIC} = \frac{1}{\|e^H(\omega)G\|^2} = \frac{1}{\|\text{iFFT(G)}\|^2}$$

Another spectral estimation approach, CAPON, that may be used to process the covariance matrix generated by the present signal processing approach is not based on signal subspace, but rather on filtering the input signal spectrum of s[k]. Using this algorithm, the imposed conditions are: For the filter, with coefficients h must have unitary gain in the pass band: $h^H e(\omega) = 1$ and the output power must be minimum: $\min_{h}\{E[|y[k]|^2]\} = \min_{h}\{E[y[k]\ y^H[k]]\} = \min_{h}\{E[h^H s[k]\ s[k]^H h]\} = \min_{h}\{h^H\ R\ h\}$

This optimization problem can be solved using the first order Lagrangian optimization method, as follows:

$$L(h) = h^H\ R\ h + \lambda(e(\omega)h^H - 1) + \lambda^*(e^H(\omega)h - 1)$$

Minimizing the Lagrangian corresponds to $\nabla_{h^*}L(h) = 0 \rightarrow R\ h + \lambda e(\omega) = 0 \rightarrow h = -\lambda R^{-1}e(\omega)$. Additionally,

$$h^H e(\omega) = 1 \rightarrow \lambda = \frac{1}{e^H(\omega)R^{-1}e(\omega)}.$$

The last two equations can be combined to generate: $h = \frac{R^{-1}e(\omega)}{e^H(\omega)R^{-1}e(\omega)}$ and the CAPON pseudo-spectrum is defined as the output power of h:

$$P_{CAPON} = h^H\ R\ h = \frac{1}{e^H(\omega)R^{-1}e(\omega)}$$

By using the present approaches for increasing the effective length of input signal to the object estimation signal processing chain of a vehicle radar systems, a larger covariance matrix can be generated and the total number of detectable objects by the radar system can be increased. For a perfect signal (i.e., generated by a perfectly implemented, and not realistic, radar system) there is a slightly lower performance caused by the predictions errors of the autoregressive model, which slightly degrade spectral estimation. However, if the phased array is not properly calibrated (i.e., most real-world radar systems), resulting in an input signal affected by multiplicative noise, the prediction error of the present autoregressive approach becomes negligible enabling the present approach to significantly enhance overall system performance for real-world application. This results because the harmonic based prediction, such as that provided by the present auto-regressive estimation approach, only reconstructs a single tone per pole, and cannot extrapolate wide band signals, such as the envelope/modulation produced by the calibration errors.

In a simulation of the present super resolution signal processing approach, two sets of simulated DoA estimation results are generated, one for a perfectly calibrated phased array (i.e., an 'ideal' radar system that, in the real world, does not exist) and the other for a non-ideally calibrated (i.e., 'real-world') phased array.

In the simulation two spectral estimators - MUSIC and CAPON - are utilized, but it should be understood that other spectral estimators may be utilized in conjunction with the present disclosure to achieve similar benefits. The present disclosure presents the use of an autoregressive model a Forward-Backward harmonic extrapolation, before applying covariance based spectral estimation to the expanded signal. Since the autoregressive model is discrete harmonic, the model does not reproduce noise and errors, thus being able to act as a filter even for multiplicative noise and parasitic modulations.

In this simulation, the phased array is formed out of 4 identical receive antenna elements (e.g., receive antenna units $RX_{1,1}$ - $RX_{1,4}$ of receiver uniter 12 of radar system 100 of FIG. 1), spaced at the half wavelength. The array of antenna elements is linear and uniformly spaced (ULA). The simulated results are obtained over 10,000 Monte Carlo runs with the radar system having a field of vision (FoV) between -90 and 90 degrees, and a SNR randomly selected for each object from a uniform distribution between 15 and 30dB.

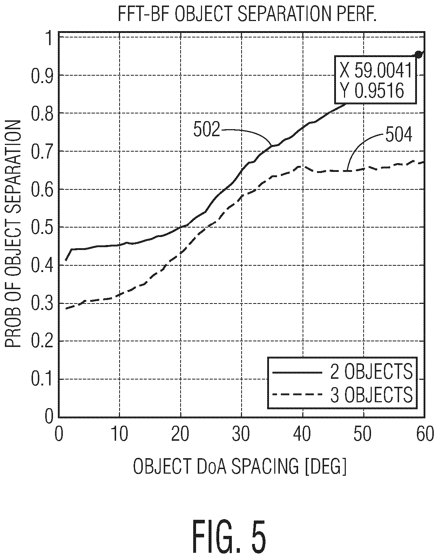

To further illustrate the benefits of the present super resolution signal processing approach, FIG. 5 is a chart depicting the probability (vertical axis) of separation or identification of two and three objects when using a conventional FFT-based DoA estimation when using a 30dB Chebychev window. The horizontal axis represents the spacing between the objects in degrees. Within FIG. 5, trace 502 represents the probability of distinguishing two objects, while trace 504 represents the probability of distinguishing three objects. As depicted in FIG. 5, using conventional processes, the likelihood that the objects are successfully separated or identified by the radar system does not exceed 75% until the two objects (trace 502) are separated by at least 30 degrees. The conventional approach cannot achieve a 75% probably of separating three objects (trace 504).

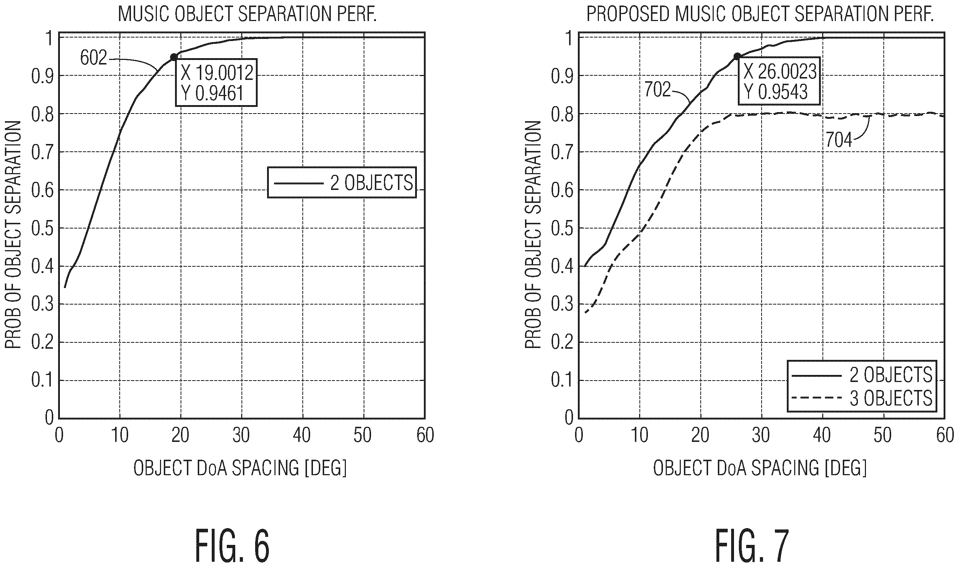

FIG. 6 depicts the performance of the MUSIC algorithm in a conventional signal processing chain. Within FIG. 6, trace 602 represents the probability of distinguishing two objects. As illustrated by FIG. 6, the MUSIC algorithm is incapable of detecting three objects using the 3by3 spatially smoothed covariance matrix obtained from 4 antenna elements in a conventional signal processing approach. In contrast, FIG. 7 depicts the performance of the MUSIC algorithm utilizing the present super resolution signal processing approach. Within FIG. 7, trace 702 represents the probability of distinguishing two objects, while trace 704 represents the probability of distinguishing three objects. Referring to FIG. 7, it can be seen that the probability of separation is lower for the present invention when there are no calibration errors present, for two objects. However, the present signal processing approach enables the MUSIC algorithm to detect three objects (as indicated by trace 704) by extrapolating the original input signal to 8 samples and constructing a 5by5 spatially smoothed covariance matrix, as described herein.

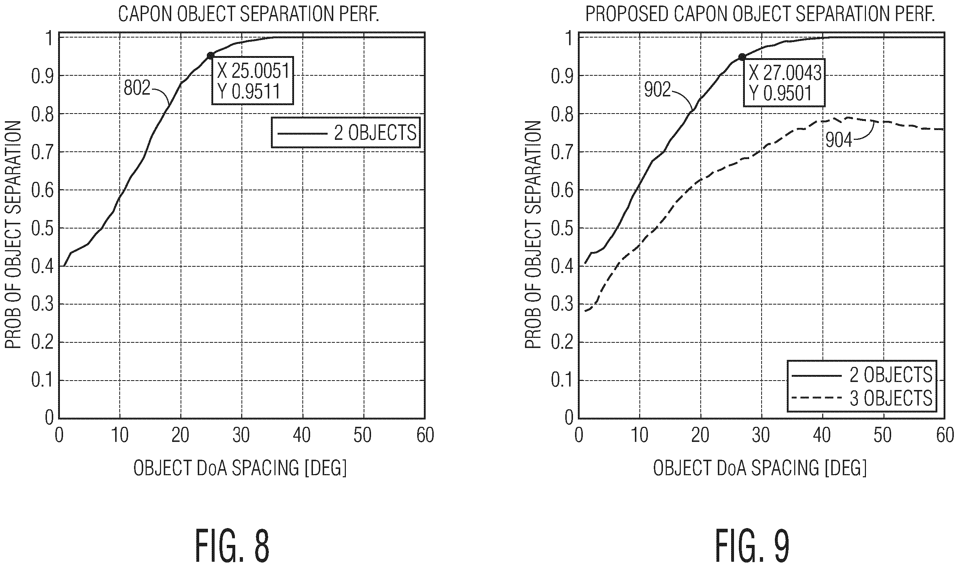

Simulation results are presented for the CAPON algorithm. Similar to the MUSIC algorithm, CAPON also requires a full-rank covariance matrix to generate the pseudospectrum, meaning that for single snapshot the 4 element signal is converted to a 3by3 FBSS Covariance matrix. With the present super resolution signal processing approach, the 4 element signal is extrapolated to 8 samples and converted into a 5by5 FBSS Covariance matrix. FIG. 8 depicts the probability of object separation for two objects (depicted by trace 802) using the conventional CAPON algorithm. FIG. 9 depicts the performance of the CAPON algorithm utilizing the present super resolution signal processing approach. Within FIG. 9, trace 902 represents the probability of distinguishing two objects, while trace 904 represents the probability of distinguishing three objects. It is shown that the results are consistent with the ones of MUSIC.

The simulation results presented above are provided in conjunction with an ideal signal use-case (i.e., generated by radar signals with idealized perfect antenna placement). What follows are simulation results generated for a more realistic radar system phased array that is affected by coupling and channel gain/phase mismatch errors that have not been properly calibrated, potentially resulting from improper antenna placement are other real-world deficiencies.

The calibration errors were modelled as an amplitude error for every antenna element drawn from a zero mean normal distribution with a standard deviation of 1.5dB, and an additional phase error drawn from a zero mean normal distribution with standard deviation 2.5 degrees.

By incorporating these simulated real-world conditions, the performance of the conventional MUSIC algorithm is degraded by a factor of 2x, while the performance of the MUSIC algorithm in conjunction with the present super resolution signal processing approach has only slightly degraded and has surpassed the performance of MUSIC for the two object use-case.

For the three object use-case the present super resolution signal processing approach enables the MUSIC algorithm to provide robust results.

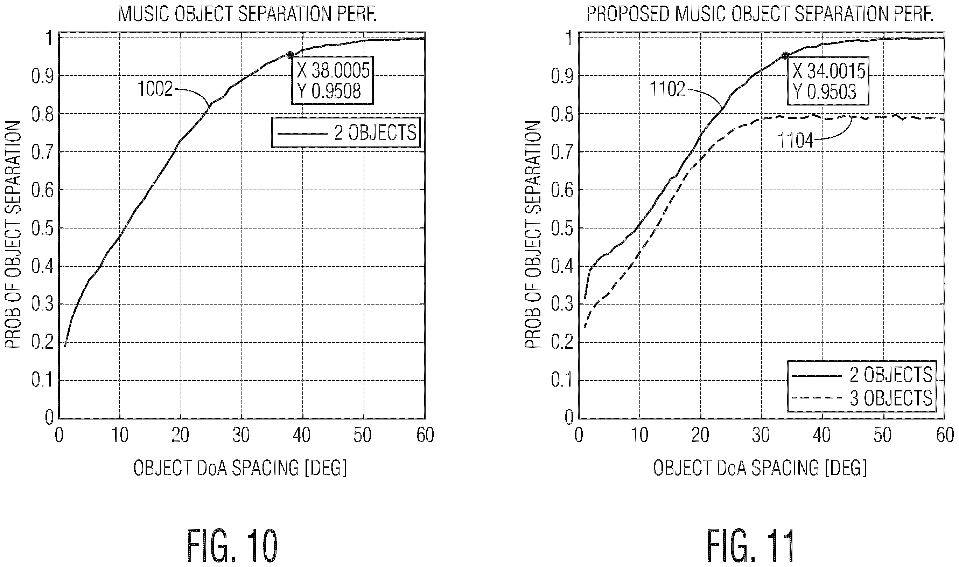

Specifically, for the real-world simulation, FIG. 10 depicts the performance of the MUSIC algorithm in a conventional signal processing chain. Within FIG. 10, trace 1002 represents the probability of distinguishing two objects. As illustrated by FIG. 10, the MUSIC algorithm is incapable of detecting three objects using the 3by3 spatially smoothed covariance matrix obtained from 4 antenna elements in a conventional signal processing approach. In contrast, FIG. 11 depicts the performance of the MUSIC algorithm utilizing the present super resolution signal processing approach. Within FIG. 11, trace 1102 represents the probability of distinguishing two objects, while trace 1104 represents the probability of distinguishing three objects. Referring to FIG. 11, it can be seen that the probability of separation is lower for the present invention when there are no calibration errors present, for two objects. However, the present signal processing approach enables the MUSIC algorithm to detect three objects (as indicated by trace 1104) by extrapolating the original input signal to 8 samples and constructing a 5by5 spatially smoothed covariance matrix, as described herein.

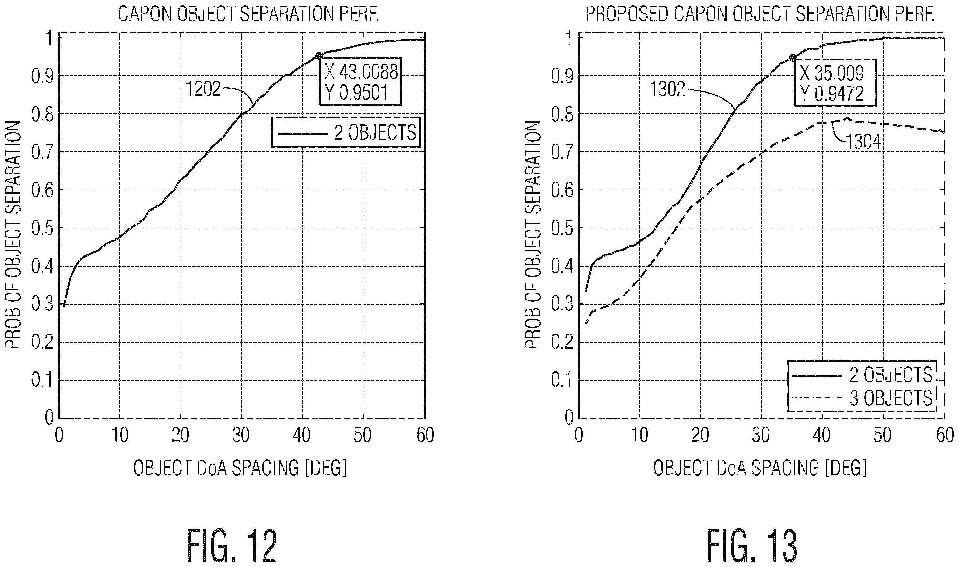

Simulation results for the 'real-world' simulation are presented for the CAPON algorithm. Similar to the MUSIC algorithm, CAPON also requires a full-rank covariance matrix to generate the pseudospectrum, meaning that for single snapshot the 4 element signal is converted to a 3by3 FBSS Covariance matrix. With the present super resolution signal processing approach, the 4 element signal is extrapolated to 8 samples and converted into a 5by5 FBSS Covariance matrix. FIG. 12 depicts the probability of object separation for two objects (depicted by trace 1202) using the conventional CAPON algorithm. FIG. 13 depicts the performance of the CAPON algorithm utilizing the present super resolution signal processing approach. Within FIG. 13, trace 1302 represents the probability of distinguishing two objects, while trace 1304 represents the probability of distinguishing three objects. It is shown that the results are consistent with the ones of MUSIC.

In summary, the present super resolution signal processing approach enables an improvement in radar system performance when the system is affected by antenna coupling / mismatch, by enhancing both resolution and separation capability. In addition, independent of the calibration errors, the present super resolution signal processing approach is capable of estimating more objects than traditional approaches.

In some aspects, the techniques described herein relate to a radar system, including: at least one transmitter and at least one receiver, wherein the at least one transmitter and the at least one receiver are configured to transmit and receive radar signals, wherein the at least one transmitter and the at least one receiver are coupled to a vehicle; and a radar processor, configured to: transmit, at a first time, a first radar signal, receive, using the at least one receiver, a received signal, process the received signal to generate a range-Doppler data frame, determine a first snapshot including a first plurality of values associated with a first range-Doppler bin of the range-Doppler data frame, process the first plurality of values in the first snapshot to generate an autoregressive model based upon the first plurality of values, use the autoregressive model to extrapolate a second snapshot, wherein the second snapshot includes the first plurality of values and a second plurality values generated using the autoregressive model, determine, using the second snapshot, a full rank covariance matrix, identify attributes of a plurality of objects using the full rank covariance matrix, and transmit the attributes of the plurality of objects to a vehicle controller.

In some aspects, the techniques described herein relate to a radar system, including: at least one transmitter and at least one receiver; and a radar processor, configured to: process a received signal to determine a first snapshot including a first plurality of values associated with a first range-Doppler bin of a range-Doppler data frame, determine a second snapshot, wherein the second snapshot includes the first plurality of values and a second plurality values generated using an autoregressive model, determine, using the second snapshot, a full rank covariance matrix, and identify attributes of a plurality of objects using the full rank covariance matrix.

In some aspects, the techniques described herein relate to a method, including: process a received signal to generate a range-Doppler data frame; determine a first snapshot including a first plurality of values associated with a first range-Doppler bin of the range-Doppler data frame; process the first plurality of values in the first snapshot to generate an autoregressive model based upon the first plurality of values; use the autoregressive model to extrapolate a second snapshot, wherein the second snapshot includes the first plurality of values and a second plurality values generated using the autoregressive model; determine, using the second snapshot, a full rank covariance matrix; and identify attributes of a plurality of objects using the full rank covariance matrix.

Although the examples have been described with reference to automotive radar systems, the systems and methods described herein may be implemented in conjunction with other types of radar systems.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first," "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims.

**Claims**

1. A radar system, comprising:

   at least one transmitter and at least one receiver, wherein the at least one transmitter and the at least one receiver are configured to transmit and receive radar signals, wherein the at least one transmitter and the at least one receiver are coupled to a vehicle; and
   a radar processor, configured to:

   transmit, at a first time, a first radar signal,
   receive, using the at least one receiver, a received signal,
   process the received signal to generate a range-Doppler data frame,
   determine a first snapshot comprising a first plurality of values associated with a first range-Doppler bin of the range-Doppler data frame,
   process the first plurality of values in the first snapshot to generate an autoregressive model based upon the first plurality of values,
   use the autoregressive model to extrapolate a second snapshot, wherein the second snapshot includes the first plurality of values and a second plurality values generated using the autoregressive model,
   determine, using the second snapshot, a full rank covariance matrix,
   identify attributes of a plurality of objects using the full rank covariance matrix, and
   transmit the attributes of the plurality of objects to a vehicle controller.

2. The radar system of claim 1, wherein the autoregressive model is configured to approximate the equality $a = -R_{xx}^{-1} r_x$ , where $a$ is a matrix containing prediction coefficients of the autoregressive model, $r_x$ is a cross-correlation vector, and $R_{xx}^{-1}$ is an inverse of the cross-correlation matrix.

3. The radar system of claim 2, wherein the radar processor is configured to process the first plurality of values in the first snapshot to generate the autoregressive model using Burg's method, Yule Walker equations, or Levinson's method.

4. The radar system of any preceding claim, wherein the radar processor is configured to identify the attributes of the plurality of objects by:

   determining a set of eigenvalues of the full rank covariance matrix; and
   determining the attributes of the plurality of objects using the set of eigenvalues.

5. The radar system of any preceding claim, wherein the radar processor is configured to identify the attributes of the plurality of objects by:
using at least one of a MUSIC spectral estimation algorithm and a CAPON spectral estimation
algorithm to generate a pseudospectrum using the full rank covariance matrix; and detecting a peak value in the pseudospectrum.

6. The radar system of any preceding claim, wherein the first snapshot includes a first number of values equal to a number of physical or virtual arrays in the radar system.

7. The radar system of claim 6, wherein the second snapshot includes a second number of values equal to two times the first number of values.

8. The radar system of claim 7, wherein the full rank covariance matrix is a matrix having dimensions N x N, where the value of N is equal the second number of values divided by 1.5.

9. The radar system of any preceding claim, wherein the first snapshot includes four values and the second snapshot includes eight values.

10. The radar system of any of claims 6 to 8, wherein the full rank covariance matrix is a matrix having dimensions 5 by 5.

11. A method, comprising:

process a received signal to generate a range-Doppler data frame;
determine a first snapshot comprising a first plurality of values associated with a first range-Doppler bin of the range-Doppler data frame;
process the first plurality of values in the first snapshot to generate an autoregressive model based upon the first plurality of values;
use the autoregressive model to extrapolate a second snapshot, wherein the second snapshot includes the first plurality of values and a second plurality values generated using the autoregressive model;
determine, using the second snapshot, a full rank covariance matrix; and
identify attributes of a plurality of objects using the full rank covariance matrix.

12. The method of claim 11, further comprising processing the first plurality of values in the first snapshot to generate the autoregressive model that approximates the equality $a = -R_{xx}^{-1} r_x$, where $a$ is a matrix containing prediction coefficients of the autoregressive model, $r_x$ is a cross-correlation vector, and $R_{xx}^{-1}$ is an inverse of the cross-correlation matrix.

13. The method of claim 12, further comprising processing the first plurality of values in the first snapshot to generate the autoregressive model using Burg's method, Yule Walker equations, or Levinson's method.

FIG. 1

EP 4 579 280 A1

INPUT SIGNAL

202

FBSS

FULL RANK COVARIANCE MATRIX

204

FIG. 2

FIG. 3

EP 4 579 280 A1

## FORWARD-BACKWARD SPATIAL SMOOTHING

INPUT: x, K
OUTPUT: $R_S$
N = dim (x)
for n = 1, ... N - K + 1 do

$$R_{F,n} = \begin{bmatrix} x^*_n x_n & \cdots & x^*_n x_{K+n-1} \\ \vdots & \ddots & \vdots \\ x^*_{K+n-1} x_n & \cdots & x^*_{K+n-1} x_{K+n-1} \end{bmatrix}$$

$$R_{B,n} = \begin{bmatrix} x^*_{N-n+1} x_{N-n+1} & \cdots & x^*_{N-n+1} x_{N-n+2-K} \\ \vdots & \ddots & \vdots \\ x^*_{N-n+2-K} x_{N-n+1} & \cdots & x^*_{N-n+2-K} x_{N-n+2-K} \end{bmatrix}$$

end for

$$R_F = \sum_{i=1}^{N-K+1} R_{F,i}$$

$$R_b = \sum_{i=1}^{N-K+1} R_{B,i}$$

$$R_S = \frac{1}{2}(R_F + R_B)$$

1   2   N-K+1

x(1)  x(2)  x(3)   $\cdots$   x(N)

K=3

$R_{F,1} = x_{1:K} x^H_{1:K}$

$R_{F,2} = x_{2:K+1} x^H_{2:K+1}$

$R_{F,N-K+1} = x_{N-K+1:N} x^H_{N-K+1:N}$

FIG. 4

FIG. 5

EP 4 579 280 A1

MUSIC OBJECT SEPARATION PERF.

602

X 19.0012
Y 0.9461

PROB OF OBJECT SEPARATION

OBJECT DoA SPACING [DEG]

2 OBJECTS

**FIG. 6**

PROPOSED MUSIC OBJECT SEPARATION PERF.

702

X 26.0023
Y 0.9543

704

PROB OF OBJECT SEPARATION

OBJECT DoA SPACING [DEG]

2 OBJECTS
3 OBJECTS

**FIG. 7**

EP 4 579 280 A1

FIG. 8

FIG. 9

EP 4 579 280 A1

MUSIC OBJECT SEPARATION PERF.

PROB OF OBJECT SEPARATION

OBJECT DoA SPACING [DEG]

1002

X 38.0005
Y 0.9508

2 OBJECTS

FIG. 10

PROPOSED MUSIC OBJECT SEPARATION PERF.

PROB OF OBJECT SEPARATION

OBJECT DoA SPACING [DEG]

1102

X 34.0015
Y 0.9503

1104

2 OBJECTS
3 OBJECTS

FIG. 11

EP 4 579 280 A1

CAPON OBJECT SEPARATION PERF.

PROB OF OBJECT SEPARATION

OBJECT DoA SPACING [DEG]

1202

X 43.0088
Y 0.9501

— 2 OBJECTS

**FIG. 12**

PROPOSED CAPON OBJECT SEPARATION PERF.

PROB OF OBJECT SEPARATION

OBJECT DoA SPACING [DEG]

1302

X 35.009
Y 0.9472

1304

— 2 OBJECTS
--- 3 OBJECTS

**FIG. 13**

EP 4 579 280 A1

**EUROPEAN SEARCH REPORT**

Application Number

EP 24 22 0601

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIM SANGDONG ET AL: "Low-Complexity Joint Extrapolation-MUSIC-Based 2-D Parameter Estimator for Vital FMCW Radar", IEEE SENSORS JOURNAL, IEEE, vol. 19, no. 6, 15 March 2019 (2019-03-15) , pages 2205-2216, XP011710783, ISSN: 1530-437X, DOI: 10.1109/JSEN.2018.2877043 [retrieved on 2019-02-14] * page 2208, right-hand column, lines 15-55 * * figure 3 * | 1-13 | INV. G01S13/42 G01S13/58 G01S13/931 G01S7/35 |
| A | PAASO HENNA ET AL: "Fast super-resolution Burg algorithm for increasing the radar angular resolution", 2023 IEEE/MTT-S INTERNATIONAL MICROWAVE SYMPOSIUM - IMS 2023, IEEE, 11 June 2023 (2023-06-11), pages 394-397, XP034385104, DOI: 10.1109/IMS37964.2023.10188000 [retrieved on 2023-07-28] * the whole document * | 1-13 | |
| A | LAWRENCE MARPLE S ET AL: "Performance tradeoffs for multi-channel parametric adaptive radar algorithms", RADAR, 2008 INTERNATIONAL CONFERENCE ON, IEEE, PISCATAWAY, NJ, USA, 2 September 2008 (2008-09-02), pages 154-159, XP031350443, ISBN: 978-1-4244-2321-7 * the whole document * | 1-13 | |

**TECHNICAL FIELDS SEARCHED (IPC)**

G01S

The present search report has been drawn up for all claims

| Place of search | Date of completion of the search | Examiner |
|---|---|---|
| Munich | 17 April 2025 | Töpfer, Nils-Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)